# EUROPEAN PATENT APPLICATION

(11) **EP 4 201 171 A1**
(43) Date of publication of application: **28.06.2023**
(21) Application number: 21216618.5
(22) Date of filing: 21.12.2021
(51) Int. Cl.: A01B 63/14, A01B 3/46, A01B 63/24, A01B 63/32, A01B 79/02

(54) **AGRICULTURAL PLOUGH AND METHOD FOR OPERATING**

(71) Applicant: CNH Industrial Sweden AB, 590 96 Överum (SE)
(72) Inventor: Hertzog, Daniel, 59376 Blackstad (SE)
(74) Representative: CNH Industrial IP Department

(57) **Abstract**

A plough comprising: a plough body and a camera that is configured to acquire images of an upcoming furrow that is to be filled with soil by the plough. The plough also comprises a controller that is configured to: determine a width or cross-sectional area of the upcoming furrow based on the acquired images; and set one or more operational characteristics of the plough based on the determined furrow width or cross-sectional area.

## Description

### Background of the Invention

The present disclosure relates to an agricultural plough, particularly, but not exclusively, to a plough comprising a plough implement. Other aspects of the present disclosure relate to a method for operating an agricultural plough.

In agriculture, farming cycles are followed that can roughly be divided into the different steps of land preparation, seed sowing, fertilizing, irrigation, crop growth, and harvesting. Each of these steps is critical to yield optimal crop results and achieve the desired returns on initial investments. Of the listed steps, land preparation is typically further divided into steps of, as necessary, clearing obstructions (e.g. bushes, stones and rocks) and subsequent tillage.

Tilling crumbles and loosens the soil, improves the soil structure and incorporates crop residues and manure into the soil, thus fertilizing the ground. The improved soil structure allows for increased plant root growth, soil aeration and water penetration/filtration. Overall this results in higher yields, better long-term soil fertility, soil moisture retention, and weed management. Tillage can be separated into primary (relatively deep) and secondary (relatively shallow) tillage. In primary tillage, such as ploughing, the soil is turned over such that nutrients come to the surface. In addition to turning up the soil to bring fresh nutrients to the top and depositing plant residue below where it will break down, this process also aerates the earth - enabling it to hold more moisture. Preparing the land to a greater depth produces a rougher surface finish than secondary tillage. Secondary tillage (e.g. seedbed cultivation) breaks up soil clods into smaller masses which might be desirable for small seeds or plants that have minimal clod-handling ability.

Primary tillage, and particularly ploughing, is widely regarded as one of the most effective ways of preventing crop disease, removing weeds, and controlling mice and other pests. In its simplest form the turnplough, also known as the mouldboard plough, includes a variety of plough bodies, which are blades for penetrating and turning over the soil in arrays of adjacent trenches, known as furrows. Modern ploughs typically include a plurality of plough bodies connected to a plough frame such that they are laterally offset from each other when the plough is in use. Each plough body is connected to the plough frame via corresponding beams. The plough frame, in turn, is connected to a towing or pushing vehicle via a hitch arranged at a front or back end of the frame.

Depending on the density of the soil, a working depth of the plough bodies can be adjusted. For instance, the plough bodies working depth may be shallow in harder (dense) soils, whereas a deeper working depth may be applied in softer (less dense) soils. The plough bodies can be rigidly attached to the main frame, such that their distance from the main frame remains constant. Accordingly, the working depth of the ploughs are then adjusted by varying the ground clearance of the main frame. If the main frame is brought closer to the ground surface, the ground clearance is reduced, and the plough bodies penetrate deeper into the soil. Similarly, if the main frame is lifted further off the ground, the ground clearance is increased, and the plough bodies are raised, thereby reducing the working depth.

The ground clearance of the main frame may, for example, be controlled by one or more depth wheels. The one or more depth wheels may be connected to any part of the main frame such as the rear end of the main frame. An adjustable linkage may be provided between the main frame and the depth wheel to allow for changes in the distance between the depth wheel and the main frame. During ploughing, the depth wheel runs on the ground surface and supports the weight of the plough. If the distance between the depth wheel and the main frame is reduced, then the ground clearance between the main frame and the ground surface reduces accordingly. On the other hand, if the distance between the depth wheel and the main frame is increased, the ground clearance of the main frame increases. As outlined before, changing the main frame's ground clearance results in a variation of the ploughing depth.

Another factor in correctly setting up agricultural ploughs is a lateral adjustment of the plough bodies of the plough implement with respect to the work vehicle, i.e. in a direction perpendicular to the direction of travel. One way of laterally adjusting the plough bodies is by shifting a main frame of the plough implement with respect to the headstock. This may be used to adjust the lateral position of the first plough body of the plough implement to create homogenously aligned furrows.

Lateral adjustment of the plough implement and thus the plough bodies can also be used to change the ploughing width of the plough bodies and the resulting furrow width. To this end, the main frame of a plough implement may be pivoted with respect to the headstock in a horizontal plane (if the ground surface is horizontal) to change an angle of the main frame with respect to the agricultural work vehicle. When pivoting the main frame, the plough bodies are moved simultaneously in a lateral direction and a longitudinal direction with respect to the agricultural vehicle. Pivoting the main frame with respect to the work vehicle will change a lateral extent of the plough implement (e.g. the plough bodies). A lateral adjustment by pivoting thus has an impact on the ploughing width of the plough implement. It follows that the pivoting adjustment may have an impact on energy consumption and/or wear of the plough may be affected.

### Summary of the Invention

According to an aspect of the present disclosure there is provided a plough comprising:
a plough body;
a camera that is configured to acquire images of an upcoming furrow that is to be filled with soil by the plough; and
a controller that is configured to:
   determine a width or cross-sectional area of the upcoming furrow based on the acquired images; and
   set one or more operational characteristics of the plough based on the determined furrow width or cross-sectional area.

Setting the one or more operational characteristics of the plough in this way can result in improved ploughing operations.

The controller may be configured to set one or more of the following operational characteristics of the plough:
a working depth of the plough body;
a working depth of a skimmer;
a furrow width;
a first furrow width;
a speed of the plough; and
an angle of the plough body.

The controller may be configured to: receive a ploughed-soil-profile-signal that represents a desired profile of the ploughed soil; and set the one or more operational characteristics of the plough also based on the received subsequent-operation-signal.

The controller may be configured to set an operational characteristic of the plough in order to overfill a first furrow.

The controller may be configured to: receive a subsequent-operation-signal that represents information about a subsequent operation that is to be performed on the soil; and set the one or more operational characteristics of the plough also based on the received subsequent-operation-signal.

The subsequent-operation-signal may represent one or more of the following:
a seeding operation, and optionally the type of seeds that will be sown;
a harrowing;
a period of time until the subsequent operation; and
the time of year that the subsequent operation will be performed.

The controller may be configured to: receive environmental-data that is indicative of the environmental conditions in which the plough is operating; and set the one or more operational characteristics of the plough also based on the received environmental-data. The environmental-data may be indicative one or more of:
air humidity;
air temperature;
soil temperature;
soil type;
soil compaction;
time of year.

There is also provided a computer-implemented method of controlling a plough, the method comprising:
acquiring images of an upcoming furrow that is to be filled with soil by the plough;
determining a width or cross-sectional area of the upcoming furrow based on the acquired images; and
setting one or more operational characteristics of the plough based on the determined furrow width or cross-sectional area.

In yet another aspect of the present disclosure, there is provided a computer program configured to perform the above method or to configure the above control unit. When run on a computer, the computer program causes the computer to configure any apparatus, including the control unit, disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

The computer program may be provided on a computer readable medium, which may be a physical computer readable medium such as a disc or a memory device, or may be embodied as a transient signal. Such a transient signal may be a network download, including an internet download.

The agricultural work vehicle and/or the agricultural implement may be remote controlled, e.g. from a farm office. Accordingly, the agricultural work vehicle may include one or more communication interfaces for connection to a remote processor and/or a remote controller. Similarly, the agricultural implement may include one or more communication interfaces for connection to a remote processor and/or a remote controller.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### Brief Description of the Drawings

One or more embodiments of the present disclosure will now be described by way of example only, with reference to the accompanying drawings, in which:
Figure 1A shows a right-side view of an agricultural implement with fixed ground engaging tools;
Figure 1B shows a left-side view of the agricultural implement shown in Figure 1A;
Figure 1C shows a plan view of the agricultural implement shown in Figure 1A;
Figure 2 shows a schematic representation of the trajectory of an agricultural machinery within a work area;
Figure 3A shows schematically a furrow that is created behind a plough body as it is moved through soil in a field;
Figure 3B shows schematically how a layer of soil is displaced to create a furrow as a plough body is moved through a field;
Figure 4 shows a modified version of Figure 2, which will be used to provide another visual illustration of upcoming furrows that are to be filled with soil by the ploughing operation; and
Figure 5 schematically illustrates a method according to the present disclosure.

### Detailed Description of the Drawings

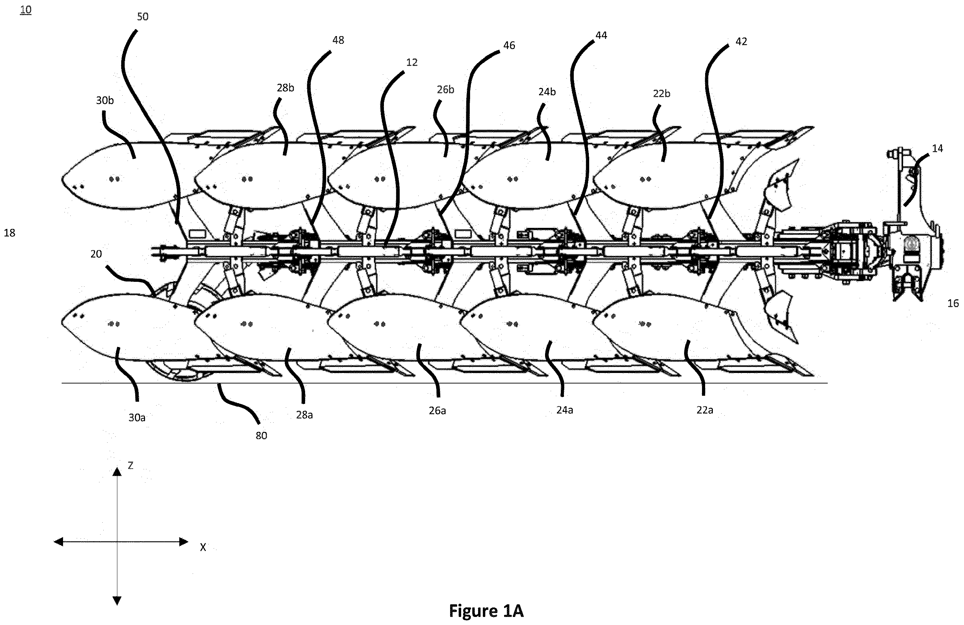

Figures 1A to 1C show various views of an agricultural implement, particularly a plough implement 10. As will be described in more detail below, the plough implement 10 shown in Figures 1A to 1C is a reversible plough.

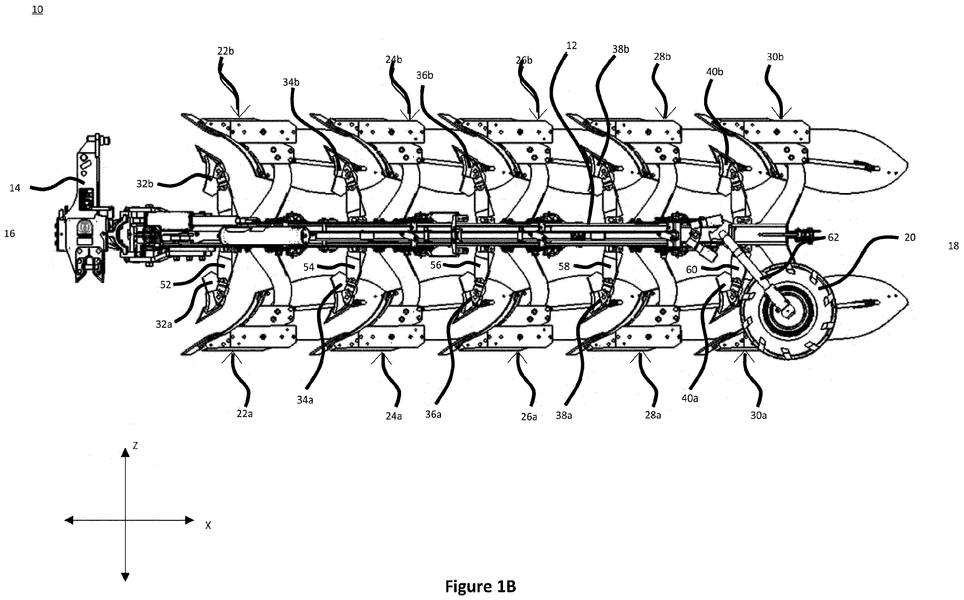

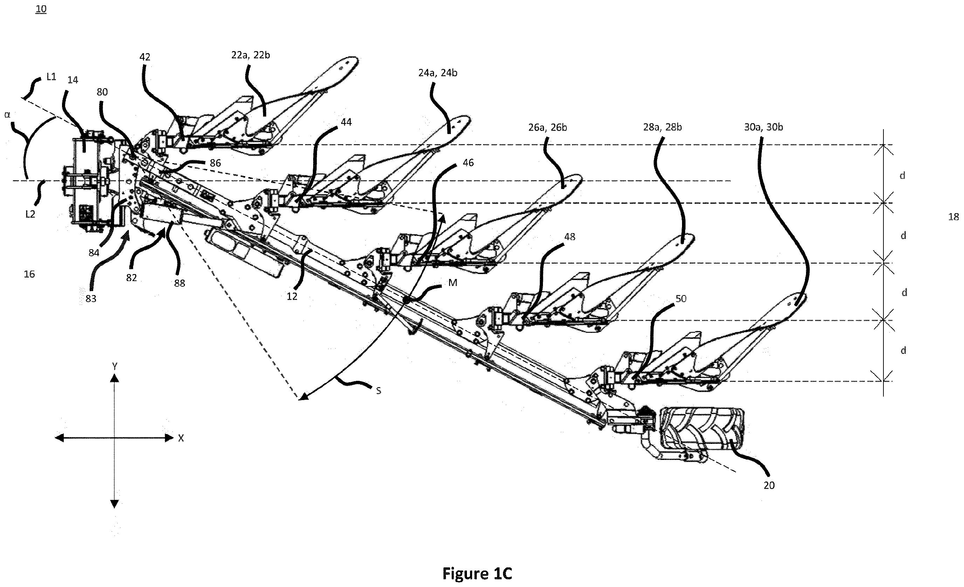

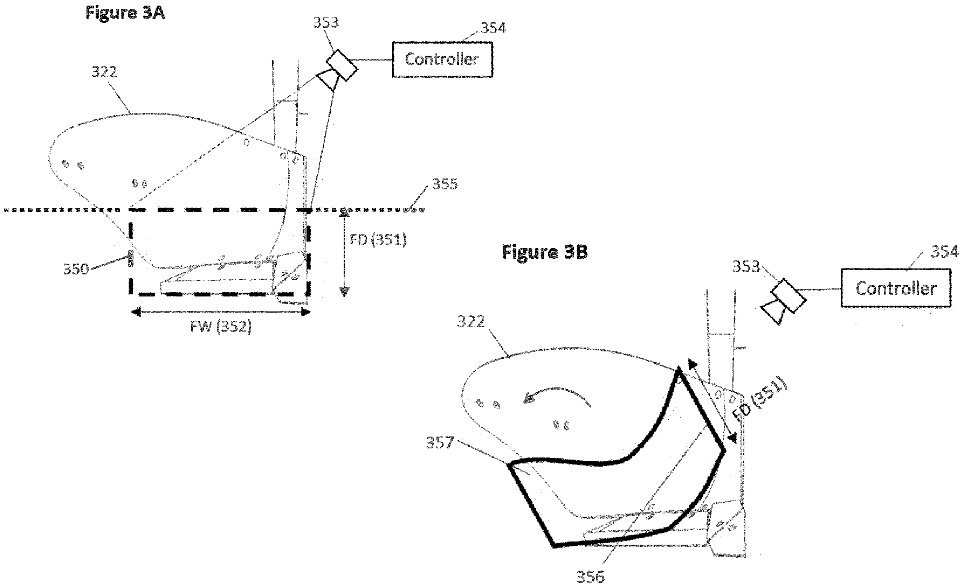

In the following, the term "longitudinal direction" shall refer to direction X shown in Figures 1A to 1C. In normal conditions, the "longitudinal direction" is aligned with a direction of travel of the agricultural plough implement 10. The term "lateral direction" shall refer to direction Y shown in Figures 1C and 3. The lateral direction Y is perpendicular to the "longitudinal direction" X. The term "vertical direction" shall refer to direction Z shown in Figures 1A and 1B. The "vertical direction" Z is perpendicular to the "longitudinal direction" X and the "lateral direction" Y.

The plough implement 10 comprises a main frame 12. The main frame 12 may be a rectangular or round tube extending between a headstock 14 at a front end 16 of the plough towards a plough wheel 20 at a rear end 18 of the plough. The main frame 12 supports a variety of ground-engaging tools. The headstock 14 includes a hitch for connecting the plough implement 10 to an agricultural work vehicle, such that the agricultural work vehicle can propel the plough implement 100 either by towing / pulling it or pushing it. References to a headstock throughout this disclosure can be interpreted broadly as a hitch, which can be present in different forms on various agricultural implements that are propelled (towed or pushed) by an agricultural work vehicle.

In the example of Figures 1A to 1C, the ground engaging tools include plough bodies 22a, 22b, 24a, 24b, 26a, 26b, 28a, 28b, 30a, 30b and plough skimmers 32a, 32b, 34a, 34b, 36a, 36b, 38a, 38b, 40a, 40b. A plurality of first ground engaging tools, i.e. plough bodies 22a, 24a, 26a, 28a, 30a and skimmers 32a, 34a, 36a, 38a, and 40a, are arranged on a first side of the main frame 12. In a first configuration of the main frame 12, illustrated in Figures 1A to 1C, the plurality of first ground engaging tools are arranged below the main frame 12.

A plurality of second ground engaging tools, i.e. plough bodies 22b, 24b, 26b, 28b, 30b and skimmers 32b, 34b, 36b, 38b, and 40b, are arranged on a second side of the main frame 12, opposite to the plurality of first ground engaging tools. In the first configuration of the main frame 12, illustrated in Figures 1A to 1C, the plurality of second ground engaging tools are arranged above the main frame.

Each of the plough bodies 22a, 22b, 24a, 24b, 26a, 26b, 28a, 28b, 30a, 30b is connected to the main frame 12 by means of beams 42, 44, 46, 48, 50. Each of the beams 42, 44, 46, 48, 50 has a substantially Y-shaped structure.

A first beam 42 supports a first pair of plough bodies 22a, 22b. A second beam 44 supports a second pair of plough bodies 24a, 24b. A third beam 46 supports a third pair of plough bodies 26a, 26b. A fourth beam 48 supports a fourth pair of plough bodies 28a, 28b. A fifth beam 50 supports a fifth pair of plough bodies 30a, 30b.

Each of the pairs of plough bodies 22a, 22b, 24a, 24b, 26a, 26b, 28a, 28b, 30a, 30b is designed to create a furrow in the field when the plough is dragged behind or pushed by an agricultural work vehicle such as a tractor. It follows that each run of the illustrated plough implement 10 through a field creates five adjacent furrows.

A first mounting rail 52 supports a first pair of skimmers 32a, 32b. A second mounting rail 54 supports a second pair of skimmers 34a, 34b. A third mounting rail 56 supports a third pair of skimmers 36a, 36b. A fourth mounting rail 58 supports a fourth pair of skimmers 38a, 38b. A fifth mounting rail 60 supports a fifth pair of plough bodies 40a, 40b. The skimmers 32a, 32b, 34a, 34b, 36a, 36b, 38a, 38b, 40a, 40b and/or their respective mounting rails may be adjustable with respect to the main frame 12 to change the distance between the skimmers 32a, 32b, 34a, 34b, 36a, 36b, 38a, 38b, 40a, 40b and the main frame. In one example, the skimmers 32a, 32b, 34a, 34b, 36a, 36b, 38a, 38b, 40a, 40b may be movable up and down towards and away from the main frame 12 to individually adjust the working depth of each of the skimmers. The skimmers 32a, 32b, 34a, 34b, 36a, 36b, 38a, 38b, 40a, 40b may either be manually or automatically adjustable.

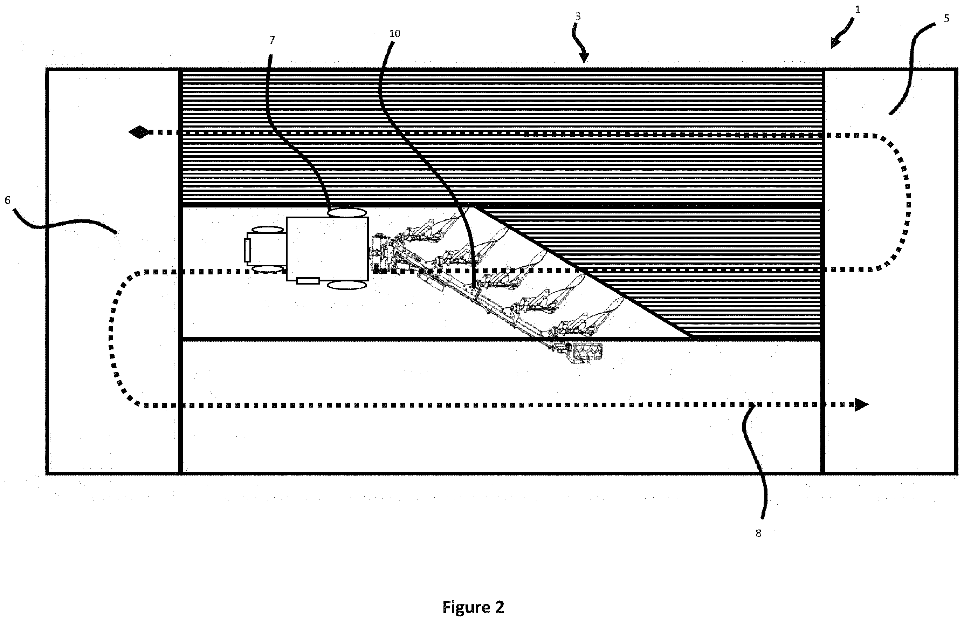

Turning to Figure 2, a typical operation of an agricultural machinery comprising a tractor 7 and a plough implement 10 is described. In use, the plough implement 10 is drawn as an attachment (implement) behind an agricultural towing vehicle (e.g. tractor 7). It will be appreciated that it is equivalently feasible to locate the plough implement 10 in front of or both in front of and behind the tractor 7.

Figure 2 shows a schematic work area 1, e.g. a crop field, which is divided into a main field 3 and headlands 5,6. A tractor 7 draws the plough implement 10 across the main field 3 in generally parallel working rows. The working rows are part of the trajectory 8 of the tractor 7 and typically run in parallel with a long edge of the work area 1. Each working row represents an individual run of the agricultural machinery across the field between headlands 5 and 6. As will be described in more detail below, a five-furrow plough, such as the exemplary plough shown in Figures 1A to 1C creates a total of five furrows per run.

At the end of each run/working row, the tractor 7 and plough implement 10 use the upcoming headland 5 or 6 for turning around, as indicated by trajectory 8. It is known in the art that the soil of the headlands 5, 6 is subject to greater levels of soil compaction as it receives more traffic per unit area than the main field 3. In order not to disturb the soil of the headlands 5, 6 more than necessary, it is known to lift the ground engaging tools, such as the plough bodies and the skimmers, off the ground into a headland or transfer position, just before the plough implement 10 reaches the headlands 5 or 6 respectively. Once the tractor 7 and the corresponding plough implement 10 have turned on the headland 5, 6, the ground engaging tools of the plough implement 10 are, again, lowered towards an operating position to engage the soil of the main field 3.

In the illustration of Figure 2, the plough implement 10 is working on the main field 3 and, therefore, is arranged in the operating position. As the plough implement 10 reaches the border between the headland 5/6 and the main field 3, the plough implement 10 is transferred to a headland/transfer position. It follows that each working row starts with an adjustment of the plough from the transfer position into the operating position and ends with an adjustment of the plough from the operating position into the transfer position.

The plough implement 10 shown in Figures 1A to 1C is of the fully-mounted type. In fully-mounted ploughs, the weight of the plough is carried exclusively by the tractor when the plough is in its transfer position (on the headlands). In other words, the plough is then exclusively supported by the tractor 7 via headstock 14 and may be lifted off the ground with a lift cylinder of a tractor linkage.

During the turning movement on the headlands, the plough implement 10 is also reversed. That is, the main frame 12 is rotated by about 180 degrees with respect to the headstock 14 to move the plough from a first configuration to a second configuration. It will be appreciated that if the operator is ploughing in the furrow, then the main frame 12 may not be rotated by exactly 180 degrees, it is more likely to be 190-200 degrees or 160-170 degrees depending on which direction the main frame 12 turns. If the operator is ploughing on-land, then the main frame 12 may be rotated by an angle that is closer to 180 degrees, perhaps exactly 180 degrees. That is, the main frame 12 is rotated by around 180 degrees with respect to the headstock 14 to move the plough from a first configuration to a second configuration.

In its first configuration shown in Figures 1A to 1C, the plough implement 10 is set up such that the plurality of first ground engaging tools, i.e. plough bodies 22a, 24a, 26a, 28a, and 30a and skimmers 32a, 34a, 36a, 38a, 40a, of each of the pairs are in contact with the soil. This first configuration is shown in Figure 2 and sometimes also referred to as the "left side configuration", since most of the plough bodies are arranged to the left of tractor 7. In its second configuration (not illustrated), the plough implement 10 is set up such that the plurality of second ground engaging tools, i.e. plough bodies 22b, 24b, 26b, 28b, 30b and skimmers 32b, 34b, 36b, 38b, 40b, are in contact with the soil. This second configuration is achieved after rotating the main frame by 180 degrees, such that the majority of plough bodies are then located to the right of the tractor (not shown). The second configuration is, therefore, also sometimes referred to as the "right side configuration".

Tilling the field with the plough implement 10 in this first configuration provides a first furrow created by the first plough body 22a, a second furrow created by the second plough body 24a, a third furrow created by the third plough body 26a, a fourth furrow created by the fourth plough body 28a, and a fifth furrow created by the fifth plough body 30a. A furrow width is determined by the lateral distance d between the plough bodies 22a, 22b, 24a, 24b, 26a, 26b, 28a, 28b, 30a, 30b, as illustrated in Figure 1C.

As the reversible plough implement 10 reaches the end of the first run, the main frame 12 is rotated by 180 degrees (reversed) with respect to the headstock 14. A turning cylinder (not shown), attached to the headstock 14 may be used to rotate (reverse) the plough implement 10. During rotation of the main frame, the first plurality of plough bodies, e.g. 22a, 24a, 26a, 28a, 30a, are transferred to the top of the plough implement 10. At the same time, the second plurality of plough bodies e.g. 22b, 24b, 26b, 28b, 30b, which were not in use in the previous run, is then transferred to the lower end of the plough implement 10 and will be submerged in the soil during the next run. The reversible plough is then in its second configuration (not shown).

Executing a second run of the field with the plough implement 10 in this second configuration provides a first furrow created by the sixth plough body 22b, a second furrow created by the seventh plough body 24b, a third furrow created by the eighth plough body 26b, a fourth furrow created by the ninth plough body 28b, and a fifth furrow created by the tenth plough body 30b.

Reversing the plough implement 10 between consecutive runs has the advantage that the plough bodies 22a, 22b, 24a, 24b, 26a, 26b, 28a, 28b, 30a, 30b that engage the soil always face the same side edge of the main field 3, irrespective of the tractor's orientation.

In both configurations of the plough implement 10 the main frame 12 is supported by an implement wheel 20. The implement wheel 20 is arranged at the back end 18 of the plough implement 10. Since the plough bodies 22a, 22b, 24a, 24b, 26a, 26b, 28a, 28b, 30a, 30b and the skimmers 32a, 32b, 34a, 34b, 36a, 36b, 38a, 38b, 40a, 40b are generally fixed to the main frame via beams 42, 44 46, 48 and 50, there is no possibility of adjusting the working depth of said ground engaging tools without changing the ground clearance of the main frame 12. To this end, the plough 10 shown in Figures 1A to 1C includes an implement wheel 20, which acts as a depth wheel to adjust the ground clearance of the main frame 12. A linkage 62 provided between the implement wheel 20 and the main frame 12 allows the operator to lift or lower the main frame 12 with respect to a ground surface 80. The linkage 62 may be connected to an actuator, e.g. a hydraulic cylinder (not shown), for adjusting the distance between the implement wheel 20 and the main frame, thereby lifting and lowering the main frame. The linkage 62 and the actuator together form a depth adjustment apparatus for the plough bodies 22a, 22b, 24a, 24b, 26a, 26b, 28a, 28b, 30a, 30b and the skimmers 32a, 32b, 34a, 34b, 36a, 36b, 38a, 38b, 40a, 40b. Since the position of the plurality of first and second ground engaging tools is fixed with respect to the main frame 12, any change in the main frame's ground clearance will also affect the working depth of the plurality of first and second ground engaging tools. In particular, if the main frame 12 is lowered by shortening the linkage 62 between implement wheel 20 and the main frame 12, then the working depth of the plurality of first ground engaging tools shown in Figures 1A to 1C is increased, i.e. the plurality of first ground engaging tools are lowered further into/towards the soil. If, on the other hand, the main frame 12 is lifted, by extending the linkage 62 between implement wheel 20 and the main frame 12, then the working depth of the plurality of first ground engaging tools is decreased, i.e. the plurality of first ground engagement tools are raised.

Referring back to Figure 1C, it will be appreciated that the distance d between the plough bodies 22a/22b, 24a/24b, 26a/26b, 28a/28b, and 30a/30b is adjustable. In the embodiment of the plough implement 10 shown in Figures 1A to 1C, the lateral distance d is adjustable by pivoting the main frame 12 in a horizontal plane, such as in the plane shown in Figure 1C. In other words, the main frame 12 is connected to the headstock 14 via a pivot 80. The main frame 12 may rotate about the pivot 80 with respect to the headstock 14 and thus also with respect to an agricultural work vehicle (not shown) that is connected to the headstock 14.

In a normal operation, a longitudinal axis L1 of the main frame 12 is arranged at an angle α with respect to a longitudinal axis L2 of a corresponding agricultural work vehicle. It will be appreciated that the angle α between the longitudinal axis L1 of the main frame 12 and the longitudinal axis L2 of the agricultural work vehicle may be changed by pivoting the main frame about the pivot 80. A plough / furrow width adjustment mechanism 82 comprises the pivot 80 and a width adjustment actuator 88. The width adjustment actuator 88 in this embodiment is a hydraulic cylinder. By retracting the width adjustment actuator 88, a front part 86 of the main frame 12 will be drawn closer towards the headstock 14, thereby increasing the angle α between the longitudinal axis L1 of the main frame 12 and the longitudinal axis L2 of the agricultural work vehicle. As the angle α between the longitudinal axes L1, L2 is increased, so is the lateral distance d between the neighbouring plough bodies 22a to 30b. Similarly, if the actuator 88 is extended, the main frame 12 is pivoted counter-clockwise in Figure 1C about the pivot 80, thereby decreasing the angle α between the longitudinal axis L1 of the main frame 12 and the longitudinal axis L2 of the agricultural work vehicle. As the angle α between the longitudinal axis L1 and L2 is decreased, the lateral distance d between the neighbouring plough bodies 22a through to 30b decreases.

Although this is not specifically represented in Figure 1C, it will also be appreciated that as the angle α between the axes L1, L2 is increased, a lateral arrangement of the main frame and the plough bodies 22a to 30b with respect to the agricultural work vehicle (not shown) changes. This is because, as the angle α is manipulated, the centre M of the plough implement is moved along circular segment S. Accordingly, as the angle α is increased, the centre M of the plough implement 10 is moved towards the bottom of Figure 1C. Similarly, if the angle α is decreased, the centre M of the plough implement 10 moves towards the top end of Figure 1C.

A lateral adjustment of the plough bodies with respect to the agricultural work vehicle may also be possible without changing the angle α between the main frame 12 and the agricultural work vehicle. In the embodiment of the plough implement 10 shown in Figures 1A to 1C, the plough implement 10 includes a lateral frame adjustment mechanism 83, which is implemented as a sliding mechanism that allows for lateral movement of the main frame 12 with respect to the headstock 14 and, therefore, with respect to the agricultural work vehicle. Such lateral movement of the main frame 12 adjusts the width of the first furrow, which is created by the first plough body 22a, 22b at the front of the plough.

Figure 3A shows schematically a furrow 350 that is created behind a plough body 322 as it is moved through soil in a field. The furrow 350 is shown in dashed lines in Figure 3A because it exists behind the plough body 322. It will be appreciated that the furrow 350 represents the absence of the soil that was in front of the plough body 322 before it was turned over by the plough body 322. The furrow 350 has a furrow width 352 and a furrow depth 351, the dimensions of which are defined by one or more of the operational characteristics of the plough, as discussed in detail above. The furrow 350 also has a cross-sectional area (in a plane that is perpendicular to the direction of travel of the plough) that is defined by the furrow width 352 and the furrow depth 351.

Figure 3B shows schematically how a layer of soil 357 is displaced to create the furrow as the plough body 322 is moved through the field.

The furrow 350 that is shown in Figure 3A can be considered as an upcoming furrow that is to be filled with soil by the plough. If the plough body 322 that is shown in Figure 3A is not the last plough body on the frame (i.e. not the plough bodies that are labelled with references 30a and 30 in Figures 1A to and 1C), then the furrow 350 will be filled by the next plough body of the plough. If the plough body 322 that is shown in Figure 3A is the last plough body on the frame, then the furrow 350 will be filled by the first plough body of the plough when it performs a future (usually the next) run that is parallel with, and adjacent to, the run that created the furrow 350.

Figure 3A also shows a camera 353 that acquires images of the furrow 350. Since the furrow 350 that is shown in Figure 3A is behind the plough body 322, it can be considered as an upcoming furrow that is to be filled with soil by the plough. As indicated above, the furrow 350 can be filled by a next plough body of the plough or by the first plough body of the plough in a subsequent run.

A controller 354 is also shown in Figure 3A. The controller 354 can determine a width 352 or cross-sectional area of the upcoming furrow 350 based on the acquired images. It will be appreciated that in order to determine the cross-sectional area of the furrow, the controller may determine the furrow depth 351 and multiply it by the furrow width 352. Various examples of how the width 352, depth 351 and cross-sectional area of the furrow 350 can be determined by the controller will be described below. The controller 354 can then set one or more operational characteristics of the plough based on the determined furrow width 352 or cross-sectional area. Advantageously, setting an operational characteristic of the plough in this way can result in an improved ploughing operation because the upcoming furrow can be filled with soil in a way that is suitable for a subsequent operation that is to be performed in the field.

Any of the examples of a controller that are described herein can set one or more of the following operational characteristics of the plough:
- a working depth of the plough body and / or a skimmer, which are both examples of ground engaging tools. In some examples the working depth of all of the ground engaging tools / plough bodies / skimmers may be set collectively, for instance by controlling an adjustable linkage to change the distance between the depth wheel and the main frame, as discussed above. In other examples, the working depth of one or more of the ground engaging tools may be adjustable independently or as a subset of the ground engaging tools. Therefore, the controller can set different working depths for different ground engaging tools. As a further still example, the angle of the plough frame with respect to the ground can be set in order to set the working depth of the plough such that ground engaging tools at one longitudinal end of the plough have a greater working depth than ground engaging tools at the other longitudinal end of the plough. That is, the plough frame can be angled up or down at the front in order to set a working depth profile of the ground engaging tools.
- a furrow width. As discussed above the furrow width can be set by changing an angle of the frame with respect to the agricultural work vehicle.
- a first furrow width. As discussed above the first furrow width can be set by shifting the frame of the plough implement with respect to the headstock, thereby adjusting the lateral position of the first plough body with respect to the adjacent furrow from the adjacent working row.
- a speed of the plough. This can be set by the controller providing a speed-control-signal to a tractor that is providing propulsion to the plough in order to adjust its speed. This example can be especially useful when the plough / tractor is being driven autonomously. If the tractor is not being controlled autonomously, then the controller can provide a speed-target-signal that causes a target speed to be displayed to the operator of the tractor such that they can manually set the speed of the tractor (and therefore the plough) to the target speed.
- an angle of the ground engaging tool (i.e. the plough body and / or the skimmer).

Although it is not described in detail above, it is known in the art to be able to adjust an angle of attack of a ground engaging tool of the plough. In the same way as described above for setting a working depth, the angle of all of the ground engaging tools can be set collectively to the same value, or the angles can be individually set for selective ones or groups of ground engaging tools.

It will be appreciated that any of the operational parameters that are described herein can be set based on the determined furrow width or cross-sectional area (either directly or indirectly following some intermediate processing) to improve the quality of a ploughing operation in any way that is relevant to a particular set of circumstances that can either be automatically determined or received from a user as user-input.

The controller 354 can determine the width 352 or cross-sectional area of the upcoming furrow 350 based on the acquired images using any image processing algorithms that are known in the art. For example, the controller 354 can perform an edge recognition operation on the acquired images to detect one or more of the corners / edges of the furrow 350. If the controller 354 detects the upper corners of the furrow 350, then it can calculate the furrow width 352 based on those recognised edges. This can include the controller using a known distance between the camera 353 and the surface of the soil 355. In turn, in one example the controller 354 can determine the distance to the surface of the soil 355 by subtracting a setting for the working depth of the plough body 322 from a known (fixed) distance between the camera 354 and the bottom of the plough body 322.

In one example, the controller 354 can determine the cross-sectional area of the furrow 350 by multiplying the furrow width 352 by the furrow depth 351. The furrow width can be determined by using any of the example implementations that are described herein. The controller 354 can determine the furrow depth 351 based on the acquired images by recognising edges in the acquired images that define the bottom corners of the furrow 350, and then using a known geometric relationship between the camera 353 and the furrow 350 to calculate the furrow depth 351.

Figure 3B will be used to describe another example of how the controller 354 can determine the furrow depth 351. Figure 3B shows a layer of soil 357 that is being turned over to create the furrow 350 that is behind the plough body 322, and is shown in Figure 3A. The depth / height of the layer of soil 357 corresponds to the furrow depth 351. As shown in Figure 3B, as the layer of soil 357 is turned over, a side surface 356 of the layer 357 is visible to the camera 353. The camera 353 shown in Figure 3B may be the same camera 353 that is shown in Figure 3A that acquires images of the furrow 350 behind the plough body 322 (with an appropriately wide field of view). Alternatively, the camera 353 shown in Figure 3B may be a different camera 353 to the one that is shown in Figure 3A. The controller 354 can process the acquired image of the side surface 356 of the layer 357 (for example, again using edge recognition techniques) to determine the thickness of the layer of soil 357 and therefore also the furrow depth 351.

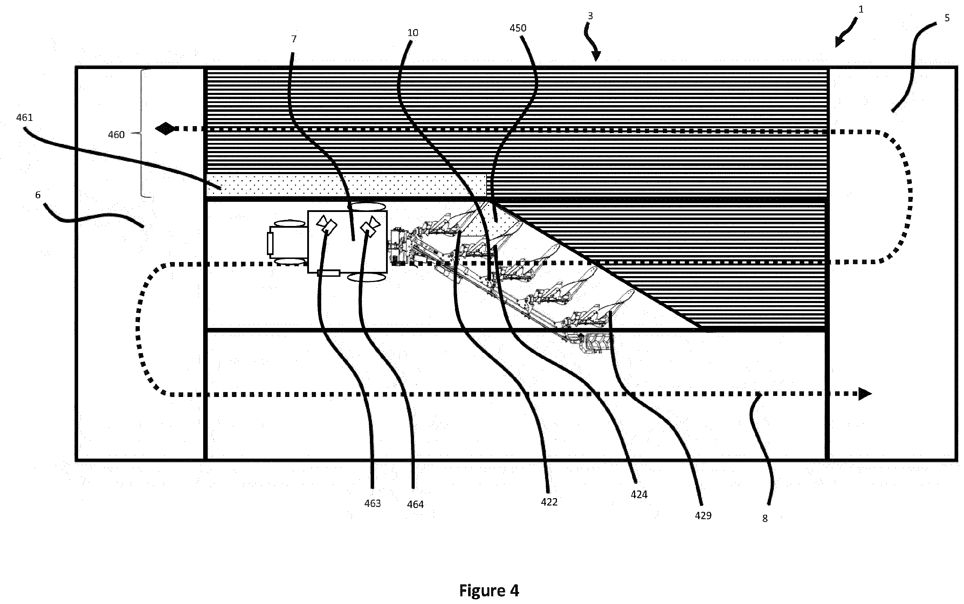

Figure 4 shows a modified version of Figure 2, which will be used to provide another visual illustration of upcoming furrows 461, 450 that are to be filled with soil by the ploughing operation.

A first example of a furrow 450 that is to be filled with soil is shown in Figure 4 immediately behind a first plough body 422 of the plough 10. This furrow 450 can correspond to the furrow as it is shown in Figure 3A with reference 350, in that it is immediately behind a plough body 422. As it is shown in Figure 4, the furrow 450 that is immediately behind the first plough body 422 will very quickly be filled by soil that is turned over by the second plough body 424. Nonetheless, an appropriately placed camera (not shown) can acquire images of the furrow 450 before it is filled with soil.

A second example of a furrow 461 that is to be filled with soil is shown in Figure 4 as a furrow 461 that runs along the length of the main field 3 up until the point at which the first plough body 422 of the plough is turning over soil into the furrow 461 as it is propelled along the field. This furrow 461 was created by an earlier run 460 of the plough 10 along the main field 3 and is left empty because it was created by the last plough body 429 of the plough 10. This furrow 461 is laterally offset from the current run of the tractor 7 / plough 10. In Figure 4, two example cameras 463, 464 are shown with fields of view that extend laterally from the side of the tractor 7 / plough 10 and are suitable for capturing images of the upcoming furrow 461 before it is filled with soil. It will be appreciated that only one of the two cameras 463, 464 that are shown in Figure 4 may be required, and that it can be positioned in any position that is suitable for capturing images of an upcoming furrow that is to be filled with soil by the plough.

In some examples of the present disclosure, the controller can receive a ploughed-soil-profile-signal that represents a desired profile of the ploughed soil. Examples of such profiles include: a flat profile and an undulating / wavy profile. Furthermore, the ploughed-soil-profile-signal can define a desired property of the profile, such as a desired depth / vertical distance between peaks and troughs of an undulating profile. Different soil profiles can be suitable for different subsequent operations, and therefore the ploughed-soil-profile-signal can be set in accordance with a type of subsequent operation that is to be performed in the field. For instance, if the soil is to be harrowed after the ploughing operation, then it can be advantageous to have a relatively large vertical distance between peaks and troughs of a wavy soil profile so that the harrow can cut off the peaks of the soil and put them into the troughs. If a seeding operation is going to be performed in the field next, then it can be beneficial for the soil to have a relatively flat profile after ploughing. The controller can then set the one or more operational characteristics of the plough also based on the received subsequent-operation-signal, such that the field is ploughed in such a way that it has a desired soil profile. As one example, increasing the furrow width can make the profile of the ploughed field flatter, and decreasing the furrow width can make the profile of the ploughed field more undulating.

In yet further examples, the controller can receive a subsequent-operation-signal that represents information about a subsequent operation that is to be performed on the soil. the controller can then set the one or more operational characteristics of the plough also based on the received subsequent-operation-signal. In a similar way to that described above, such a controller can cause the field to be ploughed in such a way that it is well-prepared for the subsequent operation. The subsequent-operation-signal can represent one or more of the following: a seeding operation, and optionally the type of seeds that will be sown; a harrowing operation; a period of time until the subsequent operation; and the time of year that the subsequent operation will be performed.

If the subsequent-operation-signal represents a period of time until the subsequent operation and / or the time of year that the subsequent operation will be performed, then the operational characteristics of the ploughing operation can be set accordingly. For example, sometimes the first furrow is wider than the other furrows, especially if ploughing is being performed in the furrow (that is, at least one wheel of the tractor is being driven in the furrow from an earlier run). This is because the tractor wheel will have compacted and enlarged the first furrow that is to be filled. For instance, a 550-700mm wide tyre may drive along a 400-550mm wide furrow. Therefore, that first furrow needs to be filled with a greater volume of soil than the other furrows, which have a well-defined width / cross-sectional area to fill. If the first furrow is filled such that it has the same level as the other furrows immediately after ploughing in the autumn, then it will probably be a valley in the spring due to the bigger volume of soil will shrinking / compacting more than the other, smaller, furrows. Therefore, to have an even result in the spring, with a flat soil profile across all furrows, the operational characteristics of the plough can be set so as to overfill the first furrow, especially if the subsequent-operation-signal indicates that the field is being ploughed in the autumn.

In further examples, the controller can receive environmental-data that is indicative of the environmental conditions in which the plough is operating. Such environmental-data can be indicative one or more of: air humidity; air temperature; soil temperature; soil type; soil compaction; and time of year, and can be provided by any appropriate sensors that are known in the art. The controller can then set the one or more operational characteristics of the plough based on the received environmental-data (in addition to the determined furrow width / cross-sectional area) in order to improve the ploughing operation for the identified environmental conditions.

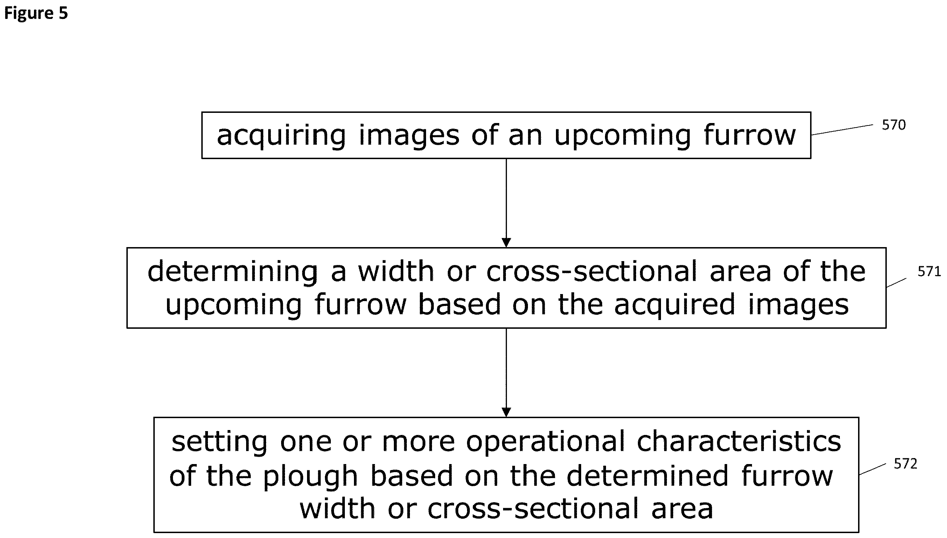

Figure 5 schematically illustrates a computer-implemented method of controlling a plough according to the present disclosure. The plough can include any of the features that are described above. At step 570, the method involves acquiring images of an upcoming furrow that is to be filled with soil by the plough. As discussed above, such images can be acquired by a camera that has a field of view that is directly behind a plough body to capture images of the furrow immediately after it is formed, or such images can be acquired by a camera that has a field of view into a furrow that has been left unfilled from an earlier run of the plough in the field.

At step 571, the method involves determining a width or cross-sectional area of the upcoming furrow based on the acquired images. Such processing can be performed according to any of the examples described above. Finally, at step 572 the method involves setting one or more operational characteristics of the plough based on the determined furrow width or cross-sectional area. Setting the one or more operational characteristics of the plough in this way can result in a ploughed field that is well-prepared for however it is to be used next.

Any of the methods or controllers disclosed herein can set the one or more operational characteristics of the plough during a ploughing operation. This can be in response to the most recently determined values for the width or cross-sectional area of the upcoming furrow, and therefore can be considered as operating substantially in real-time. Alternatively, the method or controller can set the one or more operational characteristics of the plough in response an average value of the determined values for the width or cross-sectional area of the upcoming furrow, averaged over a preceding predetermined period of time during the ploughing operation. In this way, a more gradual adjustment of the one or more operational characteristics of the plough can be made.

Preferences and options for a given aspect, feature or parameter of the invention should, unless the context indicates otherwise, be regarded as having been disclosed in combination with any and all preferences and options for all other aspects, features and parameters of the disclosure.

## Claims

1. A plough comprising:
a plough body;
a camera that is configured to acquire images of an upcoming furrow that is to be filled with soil by the plough; and
a controller that is configured to:
determine a width or cross-sectional area of the upcoming furrow based on the acquired images; and
set one or more operational characteristics of the plough based on the determined furrow width or cross-sectional area.

2. The plough of claim 1, wherein the controller is configured to set one or more of the following operational characteristics of the plough:
a working depth of the plough body;
a working depth of a skimmer;
a furrow width;
a first furrow width;
a speed of the plough; and
an angle of the plough body.

3. The plough of claim 1 or claim 2, wherein the controller is configured to:
receive a ploughed-soil-profile-signal that represents a desired profile of the ploughed soil; and
set the one or more operational characteristics of the plough also based on the received subsequent-operation-signal.

4. The plough of any preceding claim, wherein the controller is configured to set an operational characteristic of the plough in order to overfill a first furrow.

5. The plough of any preceding claim, wherein the controller is configured to:
receive a subsequent-operation-signal that represents information about a subsequent operation that is to be performed on the soil; and
set the one or more operational characteristics of the plough also based on the received subsequent-operation-signal.

6. The plough of claim 5, wherein the subsequent-operation-signal represents one or more of the following:
a seeding operation, and optionally the type of seeds that will be sown;
a harrowing;
a period of time until the subsequent operation; and
the time of year that the subsequent operation will be performed.

7. The plough of any preceding claim, wherein the controller is configured to:
receive environmental-data that is indicative of the environmental conditions in which the plough is operating; and
set the one or more operational characteristics of the plough also based on the received environmental-data.

8. The plough of claim 7, wherein the environmental-data is indicative one or more of:
air humidity;
air temperature;
soil temperature;
soil type;
soil compaction;
time of year.

9. A computer-implemented method of controlling a plough, the method comprising:
acquiring images of an upcoming furrow that is to be filled with soil by the plough;
determining a width or cross-sectional area of the upcoming furrow based on the acquired images; and
setting one or more operational characteristics of the plough based on the determined furrow width or cross-sectional area.

10. A computer program configured to perform the method of claim 9 or configure the controller of any of claims 1 to 8.
